# EUROPEAN PATENT APPLICATION

(11) **EP 1 326 434 A2**
(43) Date of publication of application: **09.07.2003**
(21) Application number: 02257485.9
(22) Date of filing: 29.10.2002
(51) Int. Cl.: H04N 5/44

(54) **Digital television channel selection**

(30) Priority: 29.12.2001 KR 2001088230
(71) Applicant: SAMSUNG ELECTRONICS CO., LTD., Suwon-City, Kyungki-do (KR)
(72) Inventor: Han, Yeon-taek 226-1302 Daerim Apt., Suwon-si, Gyeonggi-do (KR); Pan, Young-hwan, Suwon-si, Gyeonggi-do (KR)
(74) Representative: Geary, Stuart Lloyd

(57) **Abstract**

A digital television apparatus (1) is provided with a quick tuning function in which channels in the same content category as the currently selected channel are displayed for selection without the need to start at the top of a hierarchical channel selection scheme.

## Description

The present invention relates to method of operation of a digital television apparatus for channel selection, the method comprising receiving a first user input, responding to the first user input by displaying a channel selection interface, receiving a second user input, while said interface is being displayed and responding to the second user input by tuning to a channel associated with a selected element of said interface.

Modern digital televisions provide access to many more channels, possibly into the hundreds, than conventional analogue systems. This plethora of channels makes it difficult for a viewer to choose a programme to watch. For example, stepping through the channels one by one is very time-consuming. Electronic programme guides (EPG) are commonly provided by digital television services in order to avoid the need for a user step through the channels one by one when choosing a channel to watch.

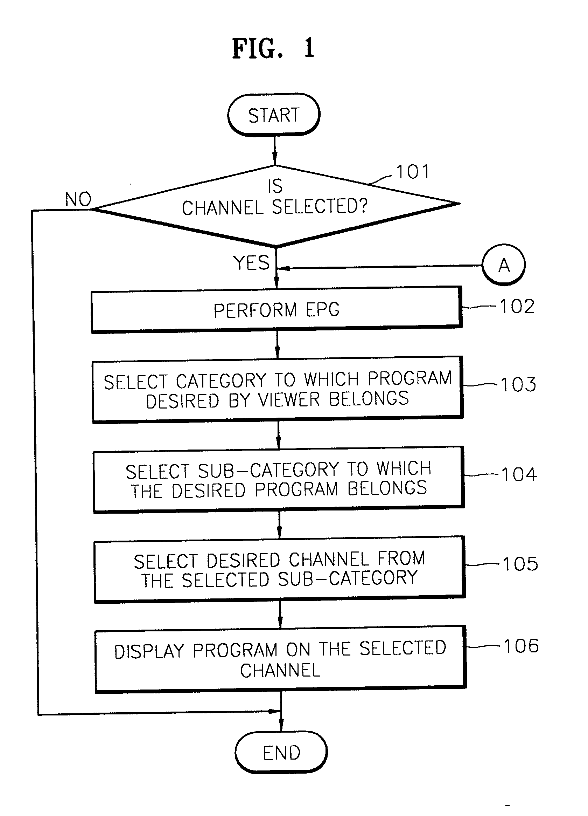

Figure 1 is a flowchart of a usual method for selecting a channel in a digital TV using an EPG. Referring to Figure 1, it is determined whether the viewer wants to select a channel in step 101. If it is determined that the viewer wants to select a channel in step 101, the EPG is activated in step 102. When a plurality of categories are displayed on a TV screen as the result of activating the EPG, the viewer selects a category to which a desired programme belongs in step 103. For example, when the viewer wants to watch sports, a sports category is selected from among the plurality of categories. When the viewer selects a category, a plurality of sub-categories corresponding to the selected category are displayed. For example, if the sports category is selected, sub-categories such as football, baseball, volleyball, cricket and basketball are displayed. When the sub-categories are displayed on the screen, the viewer selects a sub-category to which the desired programme belongs in step 104. For example, if the viewer wants to watch a football game, he/she selects the sub-category including channels relaying football games. Each sub-category includes a plurality of channels. If the viewer selects one of the plurality of channels in step 105, he/she can watch a programme provided on the selected channel in step 106.

Thus, when the viewer wants to select another channel which belongs to the same category as the current programme that he/she is watching, he/she needs to go through all of the channel selection steps again even when the channels belong to the same category.

A method according to the present invention is characterised in that the response to the first user input comprises determining which of a predetermined set of categories the currently selected channel belongs to and the set of channels identified in said interface, which may be graphical and/or textual, is restricted to those in the same category as the currently selected channel.

Preferably, the category of the currently selected channel is obtained from a database, which may be located in the television apparatus, of channel information and said database is searched to identify channels in the same category as the currently selected channel.

According to the present invention, there is also provided a digital television apparatus including a display, user input means and a control means, wherein the control means is configured to operate the apparatus in accordance with a method according to the present invention.

According to the present invention, there is further provided a signal representing control codes for configuring the control means of a digital television apparatus comprising control means, user input means and a display, to operate the apparatus in accordance with a method according to the present invention. The signal may be recorded in or on a data carrier.

An embodiment of the present invention, will now be described, by way of example, with reference to Figures 2 to 7 of the accompanying drawings, in which:
Figure 1 is a flowchart of a usual method for selecting a channel in a digital television (TV) using an electronic programme guide (EPG);
Figure 2 is a block diagram of a digital television system according to the present invention;
Figure 3 is a flowchart of a method for selecting a channel in a digital television according to a the present invention;
Figure 4 is a detailed flowchart of step 204 shown in Figure 3; and
Figures 5 to 7 are diagrams showing screens displayed during channel selection according the present invention.

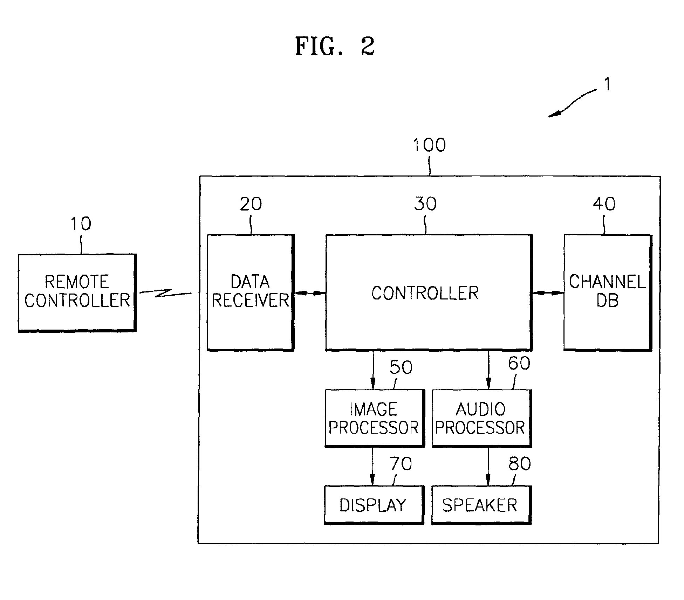

Referring to Figure 2, a digital television system 1 includes a digital television 100 and a remote controller 10 for remotely controlling the operation of the digital television 100. The digital television 100 includes a data receiver 20, a controller 30, a channel database 40, an image processor 50, an audio processor 60, a display 70 and a speaker 80.

The data receiver 20 receives control signals transmitted from the remote controller 10 and passes them on to the controller 30. The controller 30 has overall control of the operation of the digital television 100. The channel database 40 stores information on various channels, which can be displayed on the digital television 100. The information stored in the channel database 40 is based on electronic programme guide information and includes a category ID of each programme broadcasted on each channel.

The controller 30 receives the control signals transmitted from the remote controller 10 via the data receiver 20 and controls the image processor 50 and the audio processor 60 to process relevant image data and audio data respectively, on the basis of the information stored in the channel database 40. The data processed by the image processor 50 is displayed by the display 70 and the data processed by the audio processor 60 is output through the speaker 80.

The following description concerns a method for selecting a channel in a digital television 100 having the above structure.

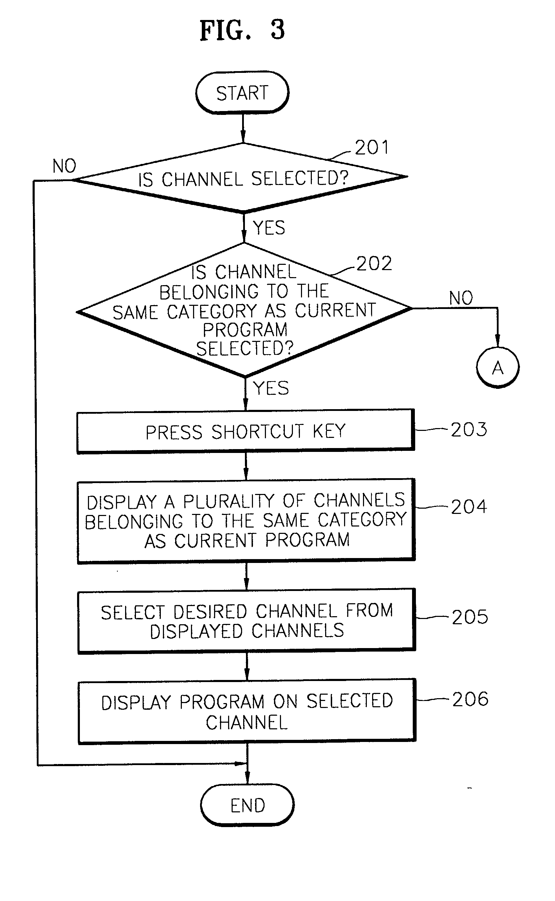

Referring to Figure 3, it is determined whether a viewer wants to select a channel in step 201. If it is determined that the viewer wants to select in step 201, it is determined whether the viewer wants to select a channel belonging to the same category as the programme that he/she is currently watching in step 202.

If the viewer wants to watch another programme belonging to the same category as the current programme, the viewer presses a shortcut key which is provided on the remote controller for channel selection in step 203. If a predetermined shortcut key is pressed by the viewer, a plurality of channels, on which programmes belonging to the same category as the current programme are broadcast, are displayed in step 204. The viewer selects a desired channel from the displayed channels in step 205 and watches the programme broadcast in the selected channel in step 206.

If the viewer wants to watch another programme belonging to a different category from that to which the current programme belongs in step 202, the procedure goes to the step A shown in Figure 1 to perform channel selection using an electronic programme guide.

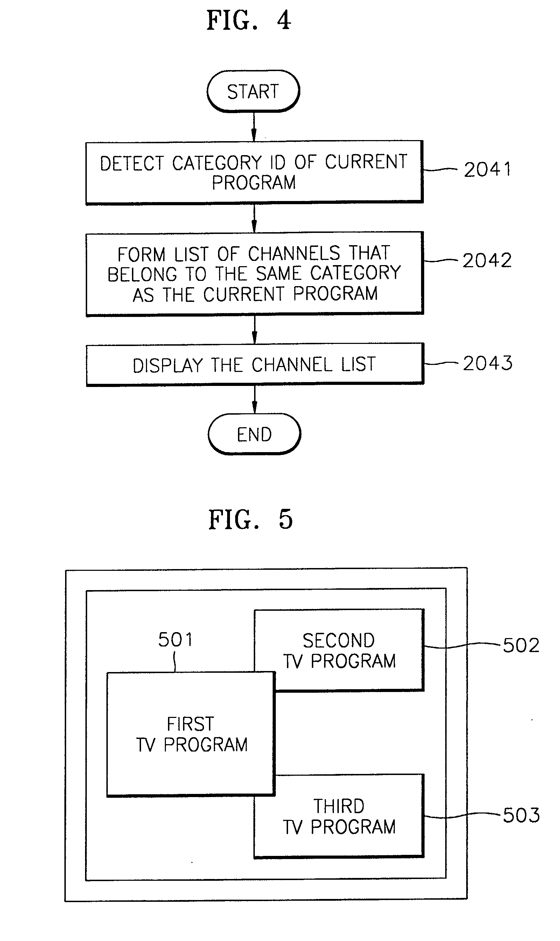

Referring to Figure 4, in order to display the channels in which programmes belonging to the same category as the current programme are broadcast, a category ID for the current programme is detected in step 2041. The category ID of the programme is contained in the electronic programme guide information stored in the channel database 40.

Next, a list of channels that belong to the same category as the current programme is formed on the basis of the detected category ID in step 2042. The channel list is displayed on the television screen in step 2043.

Referring to Figure 5 shows an example in which channels that are related to a current programme or belong to the same category as the current programme are displayed in picture-in-picture (PIP) form or twin picture form.

A first television programme is displayed in a first window 501. Second and third television programmes are displayed in second and third windows 502, 503. The first television programme may be the programme that the user is currently watching, and the second and third television programmes may be programmes belonging to the same category as the current programme. Alternatively, all of the first through third television programmes may be programs belonging to the same category as a current programme, which is not now displayed. Whenever a command for selecting a channel is transmitted from a remote controller to a digital television by a user, each channel in a channel list is tuned. As a result, one of the programmes displayed in the first through third windows 501, 502, 503 is selected and displayed in the first window 501 and/or the full screen. With such method, a desired channel is selected.

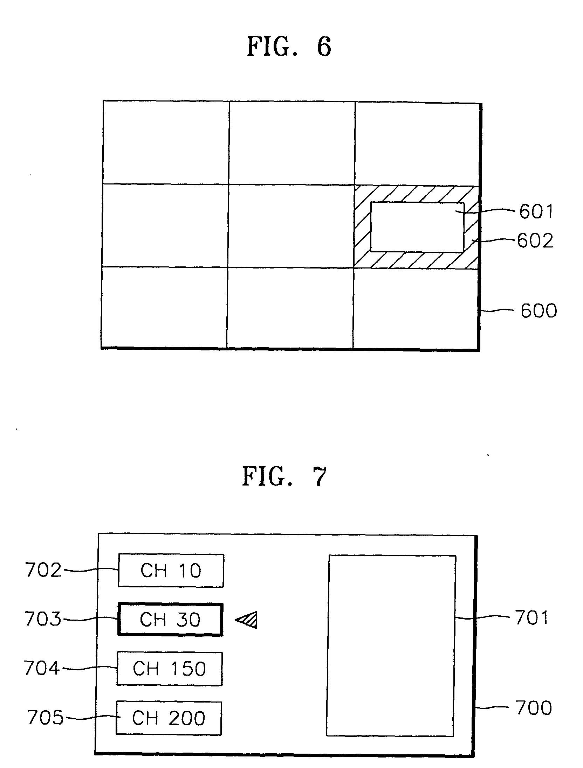

Figure 6 shows an example in which channels that are related to a current programme or belong to the same category as the current programme are displayed in multi-PIP form.

Referring to Figure 6, in the case where a user wants to select another programme belonging to the same category as a current programme, a multi-PIP screen 600 is displayed on a digital television screen. Whenever a command for selecting a channel is transmitted from a remote control to the digital television by the user, each channel in a channel list is tuned to, and one screen in the multi-PIP window is selected. For example, if a window 601 is selected, the window 601 is marked with a highlight 602.

Figure 7 shows an example in which channels that are related to a current programme or belong to the same category as the current programme are displayed as a menu in On Screen Display (OSD) form.

Referring to Figure 7, in the case where a user wants to select another programme belonging to the same category as a current programme, an OSD screen 700 is displayed on the digital television's screen. The OSD screen 700 comprises a list of channels 702, ..., 705, which is formed according to the method shown in Figure 4, in text form. Whenever a command for selecting a channel is transmitted by the user from the remote control to the digital television, a channel in the list is tuned to and selected. The selected channel may be marked with an arrow, as shown in Figure 7. The programme in the selected channel is displayed in a small window 701 included in the OSD screen 700. As a result, the user can select a desired channel while watching a programme that is displayed in the window 701 in response to channel selection.

In addition to the display methods shown in Figures 5, 6 and 7, the present invention may use a method in which, when a user operates a particular key for channel selection, channels belonging to the same category as the currently set channel are sequentially displayed for a predetermined period of time (for example, two seconds) so that the user can select a desired channel.

As described above, according a channel selection method of the present invention, it is easy to change a current channel into another channel which belongs to the same category as a programme broadcasted on the current channel.

Further, the present invention can be realized as a code which is recorded on a computer readable recording medium and can be read by a computer. The computer readable recording medium may be any type on which data which can be read by a computer can be recorded, for example, a ROM, a RAM, a CD-ROM, a magnetic tape, a floppy disc, or an optical data storage device. The present invention can also be realized as a signal (for example, transmitted through the Internet). Alternatively, computer readable recording media are distributed among computer systems connected through a network so that the present invention can be realized as a code which is stored in the recording media and can be read and executed in the computers.

## Claims

1. A method of operation of a digital television apparatus for channel selection, the method comprising:
receiving a first user input;
responding to the first user input by displaying a channel selection interface (501, 502, 503; 600, 601, 602; 700, ..., 705);
receiving a second user input, while said interface (501, 502, 503; 600, 601, 602; 700, ..., 705) is being displayed; and
responding to the second user input by tuning to a channel associated with a selected element (601; 703) of said interface (501, 502, 503; 600, 601, 602; 700, ..., 705),
**characterised in that**
the response to the first user input comprises determining which of a predetermined set of categories the currently selected channel belongs to and the set of channels identified in said interface (501, 502, 503; 600, 601, 602; 700, ..., 705) is restricted to those in the same category as the currently selected channel.

2. A method according to claim 1, wherein the category of the currently selected channel is obtained from a database (40) of channel information and said database (40) is searched to identify channels in the same category as the currently selected channel.

3. A digital television apparatus including a display (70), user input means (10) and a control means (30), wherein the control means (30) is configured to operate the apparatus in accordance with a method according to claim 1 or 2.

4. A signal representing control codes for configuring the control means (30) of a digital television apparatus (1) comprising control means (30), user input means (10) and a display (70), to operate the apparatus (1) in accordance with a method according to claim 1 or 2.

5. A data carrier having a signal according to claim 4 recorded therein or thereon.

6. A method for selecting a channel in a digital television, comprising the steps of:
(a) generating a channel selection command in response to a user's operation;
(b) displaying information about channels, on which programs belonging to the same category as a current channel are broadcasted, on a television screen in response to the channel selection command;
(c) selecting a desired channel referring to the information about the channels; and
(d) display a program which is broadcasted on the selected channel.

7. The method of claim 6, wherein step (b) comprises the steps of:
(b-1) detecting a category ID of a current program;
(b-2) forming a list of channels, which belong to the same category as the current program, based on the category ID; and
(b-3) displaying the list on the television screen.

8. The method of claim 6, wherein in step (b) the information about the channels is displayed in one form selected from the group consisting of picture-in-picture (PIP) form, twin picture form, multi-PIP form, and on screen display (OSD) form.

9. The method of claim 7, wherein the category ID is based on electronic program guide (EPG) information.

10. A method for selecting a channel in a digital television, comprising the steps of:
(a) generating a channel selection command in response to a user's operation;
(b) detecting a category ID of a current program in response to the channel selection command;
(c) forming a list of channels, which belong to the same category as the current program, based on the category ID;
(d) displaying the list on a television screen;
(e) selecting a desired channel referring to the list of channels; and
(f) displaying a program which is broadcasted on the selected channel.

11. The method of claim 10, wherein in step (d) the list of channels is displayed in one form selected from the group consisting of picture-in-picture (PIP) form, twin picture form, multi-PIP form, and on screen display (OSD) form.

12. The method of claim 10, wherein the category ID is based on electronic program guide (EPG) information.

13. A computer-readable recording medium in which a program for executing the method of any one of claims 4 through 10 in a computer is recorded.
